# EUROPEAN PATENT APPLICATION

(11) **EP 4 322 500 A1**
(43) Date of publication of application: **14.02.2024**
(21) Application number: 23189879.2
(22) Date of filing: 04.08.2023
(51) Int. Cl.: H04L 65/1016, H04L 65/1069, H04L 65/1104, H04W 76/25, H04W 76/27

(54) **AVOID ACCESS BARRING FOR MT SERVICE**

(30) Priority: 11.08.2022 US 202263371108 P; 21.07.2023 US 202318225067
(71) Applicant: MediaTek Inc., 30078 Hsinchu City (TW)
(72) Inventor: LIN, Yu-Hsin, 30078 Hsinchu City (TW); LIN, Yuan-Chieh, 30078 Hsinchu City (TW); KO, Cheng-Hsiao, 30078 Hsinchu City (TW); MO, Shang-Ru, 30078 Hsinchu City (TW)
(74) Representative: Wright, Howard Hugh Burnby

(57) **Abstract**

A method of performing MT services using an indication to avoid barring in access control is provided. UE sends an indication related to an MT service to the NAS layer when the MT service starts, or when a corresponding communication session of the MT service is handover to 3GPP access. Once the service has successfully been set up, then as long as the service is ongoing, the following access attempts are allowed to proceed without further access control checking in order to avoid barring: MMTEL voice, MMTEL video, and SMSolP. In one novel aspect, based on the indication provided to the NAS layer when the MT service starts or when handover to 3GPP access occurs, UE skips access control after UE goes to idle mode and establishes an RRC connection to resume the MT service.

## Description

### TECHNICAL FIELD

The disclosed embodiments relate generally to wireless communication, and, more particularly, to a method of supporting Unified Access Control (UAC) for mobile terminated (MT) multimedia services in next generation mobile communication systems.

### BACKGROUND

The wireless communications network has grown exponentially over the years. A Long-Term Evolution (LTE) system offers high peak data rates, low latency, improved system capacity, and low operating cost resulting from simplified network architecture. LTE systems, also known as the 4G system, also provide seamless integration to older wireless networks, such as GSM, CDMA and Universal Mobile Telecommunication System (UMTS). In LTE systems, an evolved universal terrestrial radio access network (E-UTRAN) includes a plurality of evolved Node-Bs (eNodeBs or eNBs) communicating with a plurality of mobile stations, referred to as user equipments (UEs). The 3rd generation partner project (3GPP) network normally includes a hybrid of 2G/3G/4G systems. With the optimization of the network design, many improvements have developed over the evolution of various standards.

The signal bandwidth for next generation 5G new radio (NR) systems is estimated to increase to up to hundreds of MHz for below 6GHz bands and even to values of GHz in case of millimeter wave bands. Furthermore, the NR peak rate requirement can be up to 20Gbps, which is more than ten time of LTE. Three main applications in 5G NR systems include enhanced Mobile Broadband (eMBB), Ultra-Reliable Low Latency Communication (URLLC), and massive Machine-Type Communication (MTC) under millimeter wave technology, small cell access, and unlicensed spectrum transmission. Multiplexing of eMBB & URLLC within a carrier is also supported.

Access control (e.g., UAC, Unified Access Control) is used by the network to protect itself against overload by limiting the access attempts from the UEs. A UE is configured with UAC parameters and access categories according to various services. During an RRC connection establishment procedure, the UE is providing the network a corresponding RRC establishment cause according to the access categories, and the UE NAS layer is deciding access categories by an indication from the upper layers. UE will avoid access control when receiving indications from upper layers that there is ongoing service. During the service, the RRC connection may be released by the network, e.g., idle for a while, such as a call is on hold. The UE then sends service request to the network for the service once there are data needed to be sent. However, the UE is unable to avoid access barring or use the correct establishment cause for a mobile terminated (MT) service because the UE is not sending indication to the NAS layer when the MT service starts.

A solution is sought.

### SUMMARY

A method of performing MT services using an indication to avoid barring in access control is provided. UE sends an indication related to an MT service to the NAS layer when the MT service starts, or when a corresponding communication session of the MT service is handover to 3GPP access. Once the service has successfully been set up, then as long as the service is ongoing, the following access attempts are allowed to proceed without further access control checking in order to avoid barring: MMTEL voice, MMTEL video, and SMSoIP. In one novel aspect, based on the indication provided to the NAS layer when the MT service starts, UE skips access control after UE goes to idle mode and establishes an RRC connection to resume the MT service.

In one embodiment, a UE receives a SIP request for a mobile terminated (MT) service in a mobile communication network. The UE starts the MT service, where the UE sends a first indication from an upper layer to a non-access stratum (NAS) layer of the UE to indicate that the MT service has started. The UE establishes a radio resource control (RRC) connection to resume the MT service after the UE enters an RRC IDLE mode. The UE determines to skip an access control process for the MT service based on the first indication sent to the NAS layer upon the establishing of the RRC connection. In one embodiment, the MT service belongs to one of an IP multimedia subsystem (IMS) multimedia telephony (MMTel) voice service, MMTel video service, and a short message service over IP (SMSoIP).

Other embodiments and advantages are described in the detailed description below. This summary does not purport to define the invention. The invention is defined by the claims.

### BRIEF DESCRIPTION OF THE DRAWINGS

Figure 1 illustrates a 3GPP network that supports access control for mobile terminated (MT) services in accordance with one novel aspect.
Figure 2 illustrates simplified block diagrams of a user equipment (UE) and a network entity in accordance with embodiments of the current invention.
Figure 3 illustrates one embodiment of supporting MT services with access control in a next generation system in accordance with one novel aspect.
Figure 4 is a flow chart of a method of performing MT services using an indication to avoid access barring in accordance with a novel aspect.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically illustrated in order to simplify the drawing.

### DETAILED DESCRIPTION

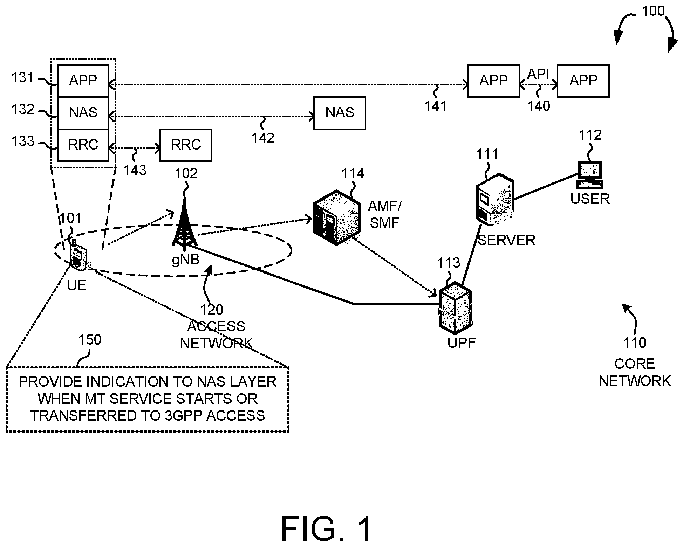

Figure 1 illustrates a 3GPP network 100 that supports access control for mobile terminated (MT) services in accordance with one novel aspect. Next generation mobile communication system 100 comprises an application server 111 that provides various services to a plurality of User Equipments (UEs) including UE 101. In the example of Figure 1, application server 111, a User Plane Function (UPF) 113, an access and mobility function (AMF) and a session management function (SMF) 114 belong to part of a core network 110. UE 101 and its serving base station (gNB) 102 belong to part of a radio access network (RAN) 120. Application server 111 communicates with UE 101 through UPF 113, and gNB 102. In addition, an AMF and SMF 114 communicates with gNB 102for mobility and session management of wireless access devices in 3GPP network 100. UE 101 may be equipped with a single radio frequency (RF) module or transceiver or multiple RF modules or transceivers for applications and services via different RATs/CNs. UE 101 may be a smart phone, a wearable device, an Internet of Things (IoT) device, a tablet, a machine-type communication (MTC) device, etc.

In the example of Figure 1, application server 111 provides various services/applications to UE 101 in application (APP) protocol layer through an established application-programming interface (API) 140. Typical services include emergency services, Mobile Originated (MO) and Mobile Terminated (MT) IMS multimedia telephony (MMTel) voice, MMTel video, and SMSoIP services. To provide the end-to-end MMTel services, application server 111 communicates with the plurality of UEs in the 3GPP network. Each UE comprises various protocol layer modules to support the end-to-end applications and data connections. In the application level, APP module 131 communicates with server 111 in APP protocol layer (e.g., depicted by dashed line 141), which provides the end-to-end control/data. In the network or NAS level, NAS module 132 communicates with AMF/SMF 114 in non-access stratum protocol layer (e.g., depicted by dashed line 142), which supports mobility and session management and other signaling functionality. In the radio network access (RAN) or AS level, RRC module 133 communicates with gNB 102 in radio resource control (RRC) protocol layer (e.g., depicted by dashed line 143), which takes care of broadcast of system information, RRC connection control, paging, radio configuration control, QoS control, etc.

Access control (e.g., UAC, Unified Access Control) is used by the network to protect itself against overload by limiting the access attempts from the UEs. A UE is configured with UAC parameters and access categories according to various services. During an RRC connection establishment procedure, the UE is providing the network a corresponding RRC establishment cause according to the access categories, and the UE NAS layer is deciding access categories by an indication from the upper layers. UE will avoid access control when receiving indications from upper layers that there is ongoing service. During the service, the RRC connection may be released by the network, e.g., idle for a while, such as a call is on hold. The UE then sends service request to the network for the service once there are data needed to be sent. However, the UE is unable to avoid access barring or use the correct establishment cause for a mobile terminated (MT) service because the UE is not sending indication to the NAS layer when the MT service starts.

In accordance with one novel aspect, a method of performing MT services using an indication to avoid barring in access control is provided. UE 101 sends an indication related to an MT service to the NAS layer when the MT service starts, or when a corresponding communication session of the MT service is handed over to 3GPP access (150). Once the service has successfully been set up, then as long as the service is ongoing, the following access attempts are allowed to proceed without further access control checking in order to avoid barring: MMTEL voice, MMTEL video, and SMSoIP. In one novel aspect, based on the indication provided to the NAS layer when the MT service starts or when handover to 3GPP access occurs, UE 101 skips access control after the UE goes to idle mode and establishes an RRC connection to resume the MT service.

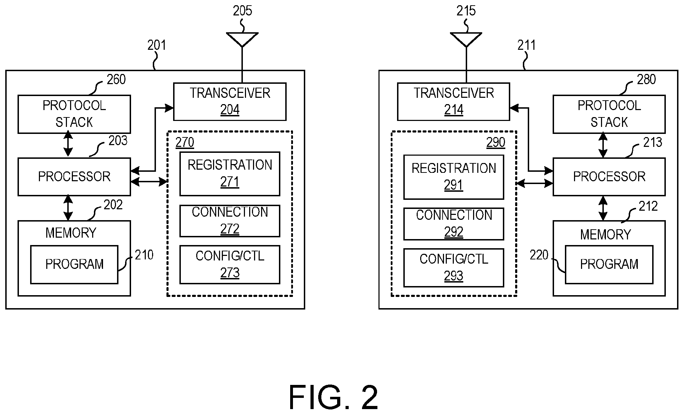

Figure 2 illustrates simplified block diagrams of wireless devices, e.g., a UE 201 and a network entity 211 in accordance with embodiments of the current invention. Network entity 211 may be a base station and/or an AMF/SMF. Network entity 211 has an antenna 215, which transmits and receives radio signals. A radio frequency RF transceiver module 214, coupled with the antenna, receives RF signals from antenna 215, converts them to baseband signals and sends them to processor 213. RF transceiver 214 also converts received baseband signals from processor 213, converts them to RF signals, and sends out to antenna 215. Processor 213 processes the received baseband signals and invokes different functional modules to perform features in base station 211. Memory 212 stores program instructions and data 220 to control the operations of base station 211. In the example of Figure 2, network entity 211 also includes protocol stack 280 and a set of control function modules and circuits 290. Protocol stacks 280 includes Non-Access-Stratum (NAS) layer to communicate with an AMF/SMF/MME entity connecting to the core network, Radio Resource Control (RRC) layer for high layer configuration and control, Packet Data Convergence Protocol/Radio Link Control (PDCP/RLC) layer, Media Access Control (MAC) layer, and Physical (PHY) layer. In one example, control function modules and circuits 290 includes a registration circuit 291 that handles registration procedures, a connection handling circuit 292 that handles signaling connections, and a configuration and control circuit 293 that provides different parameters to configure and control UE of related functionalities including registration and paging. The network entity 211 can be one 5GS network component or more than one 5GS network component (e.g., access network + AMF + N31WF + SMF, etc.)

Similarly, UE 201 has memory 202, a processor 203, and radio frequency (RF) transceiver module 204. RF transceiver 204 is coupled with antenna 205, receives RF signals from antenna 205, converts them to baseband signals, and sends them to processor 203. RF transceiver 204 also converts received baseband signals from processor 203, converts them to RF signals, and sends out to antenna 205. Processor 203 processes the received baseband signals and invokes different functional modules and circuits to perform features in UE 201. Memory 202 stores data and program instructions 210 to be executed by the processor to control the operations of UE 201. Suitable processors include, by way of example, a special purpose processor, a digital signal processor (DSP), a plurality of micro-processors, one or more micro-processor associated with a DSP core, a controller, a microcontroller, application specific integrated circuits (ASICs), file programmable gate array (FPGA) circuits, and other type of integrated circuits (ICs), and/or state machines. A processor associated with software may be used to implement and configure features of UE 201.

UE 201 also includes protocol stacks 260 and a set of control function modules and circuits 270. Protocol stacks 260 includes APP layer for various application services including IMS MMTel voice/video and SMS over IP, NAS layer to communicate with an AMF/SMF/MME entity connecting to the core network, RRC layer for high layer configuration and control, PDCP/RLC layer, MAC layer, and PHY layer. Control function modules and circuits 270 may be implemented and configured by software, firmware, hardware, and/or combination thereof. The control function modules and circuits, when executed by the processors via program instructions contained in the memory, interwork with each other to allow UE 201 to perform embodiments and functional tasks and features in the network. In one example, control function modules and circuits 270 includes a registration handling circuit 271 that performs registration procedure with the network, an access and connection handling circuit 272 that handles RRC and NAS signaling connection, and a config and control circuit 273 that handles configuration and control parameters including determining UE access category and RRC establishment cause, providing indication to NAS layer for the start or handover of MT service to avoid access barring. In one embodiment, the MT service belongs to one of a multimedia telephony (MMTel) voice service, MMTel video service, and a short message service over IP (SMSoIP).

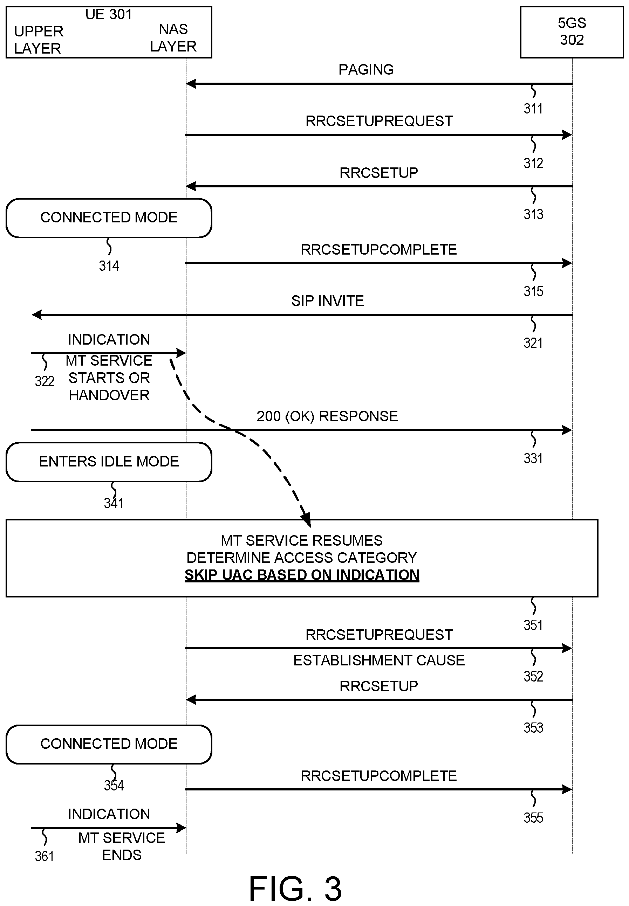

Figure 3 illustrates one embodiment of supporting MT services with access control in a next generation system in accordance with one novel aspect. In 5GS, UE 301 initially is in RRC IDLE mode, and comprises upper layers (including APP layer) for receiving various application services, and NAS layer for communicating with a network entity 302 (including AMF/SMF/MME) via NAS signaling. In step 311, the network determines that there is a MT call for UE 301, and sends a paging to UE 301 that is in RRC IDLE mode. Upon receiving the paging, UE 301 establishes an RRC connection with the network and enters RRC CONNECTED mode. In one example, in step 312, UE 301 sends an RRCSetupRequest message to the network for establishing an RRC connection. In step 313, UE 301 receives an RRCSetup message from the network for successfully establishing the RRC connection. In step 314, UE 301 enters RRC CONNECTED mode and send a RRCSetupComplete 315 to 5GS 302. In step 321, UE 301 receives a SIP INVITE request message (IMS level), indicating that there is a voice call waiting. For example, UE 301 can pop up a window on the screen to a user indicating the voice call, and the user can then respond to the voice call.

The MT service starts upon receiving the SIP INVITE (in step 321). Note that before gaining access to the network, UE 301 typically needs to perform access control, e.g., access barring with UAC. Here, however, it is assumed that the network performs access check locally before sending paging/invite. In accordance with one novel aspect, in step 322, the upper layer of UE 301 sends an indication to the NAS layer of the UE to indicate the start of the MT service. Here, the MT service includes MT-MMTEL-voice, MT-MMTEL-video, and MT-SMSoIP-attempt. MMTEL-voice is a multimedia telephony communication session with only audio or only real-time text or only both audio and real-time text, MMTEL-video is a multimedia telephony communication session with video, and SMSoIP is an SMS over IP session. When a terminating multimedia telephony communication session starts (i.e. the SIP INVITE is received), the terminating multimedia telephony communication session is offering only audio or only real-time text or only both audio and real-time text (i.e. in the SDP offer in the INVITE request), and no other terminating multimedia telephony communication session started with offering only audio or only real-time text or only both audio and real-time text exists, the UE sends the MT-MMTEL-voice-started indication to the NAS layer. In step 331, UE 301 sends a 200 (OK) response signaling message (IMS level), indicating to the network that the user has answered the voice call.

Alternatively, when an ongoing terminating multimedia telephony communication session is handed over from non-3GPP access to 3GPP access, the upper layer of UE 301 also sends an indication to the NAS layer of the UE to indicate the handover. The UE determines that the MT service is transferred when the UE sends a PDU session establishment request in an UL NAS TRANSPORT message with a request type set to "existing PDU session". If only audio or only real-time text or only both audio and real-time text are used in the multimedia telephony communication session, the UE sends the MT-MMTEL-voice-started indication and the handover of ongoing MMTEL voice call from non-3GPP access indication to the non-access stratum layer. If video is used in the multimedia telephony communication session, the UE sends the MT-MMTEL-video-started indication and the handover of ongoing MMTEL video call from non-3GPP access indication to the non-access stratum layer.

Later on, in step 341, under certain scenarios, UE 301 enters RRC IDLE mode. For example, the RRC connection may be released by the network, e.g., idle for a while, such as a call is on hold. In step 351, UE 301 resumes the MT service. Again, before gaining access to the network, UE 301 typically needs to perform access control, e.g., access barring with UAC. However, to avoid access barring for the same MT service, UE 301 skips the access control (e.g., UAC) and attempts to access the network directly. Specifically, UE 301 avoids the access barring based on the previous indication sent to the NAS layer (in step 322). UE 301 determines access category, RRC establishment cause, and a call type, of the MT service for establishing the RRC connection based on the indication.

In one novel aspect, UE 301 skips access control based on the indication, and sends a service request to the network directly for the MT service once there are data needed to be sent. To do so, UE 301 establishes an RRC connection with the network and enters RRC CONNECTED mode. In one example, in step 352, UE 301 sends an RRCSetupRequest message to the network for establishing an RRC connection. In step 353, UE 301 receives an RRCSetup message from the network for successfully establishing the RRC connection. In step 354, UE 301 enters RRC CONNECTED mode and send a RRCSetupComplete in step 355 to 5GS 302. In step 361, when the MT service ends, UE 301 sends a specific indication to the NAS layer to indicate the end of the MT service.

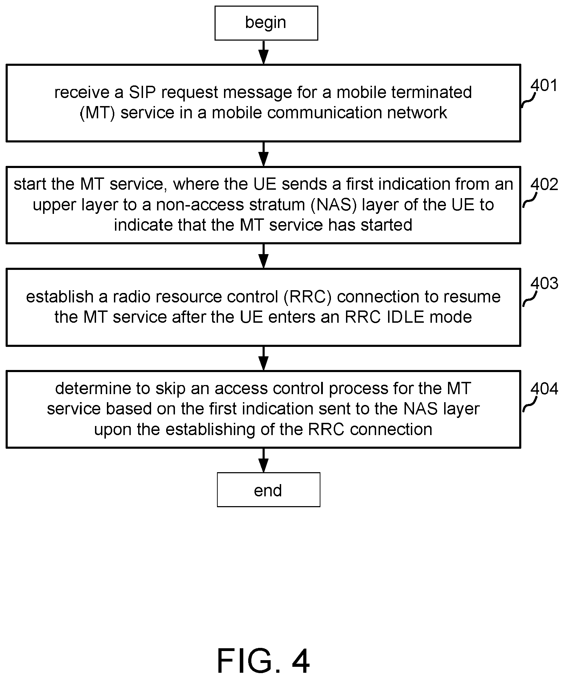

Figure 4 is a flow chart of a method of performing MT services using an indication to avoid access barring in accordance with a novel aspect. In step 401, a UE receives a SIP request message for a mobile terminated (MT) service in a mobile communication network. In step 402, the UE starts the MT service, where the UE sends a first indication from an upper layer to a non-access stratum (NAS) layer of the UE to indicate that the MT service has started. In step 403, the UE establishes a radio resource control (RRC) connection to resume the MT service after the UE enters an RRC IDLE mode. In step 404, the UE determines to skip an access control process for the MT service based on the first indication sent to the NAS layer upon the establishing of the RRC connection. In one embodiment, the MT service belongs to one of a multimedia telephony (MMTel) voice service, MMTel video service, and a short message service over IP (SMSoIP).

It will be apparent to those skilled in the art that various modifications and variations can be made to the disclosed embodiments. It is intended that the specification and examples be considered as exemplary only, with a true scope of the disclosure being indicated by the following claims and their equivalents.

## Claims

1. A method, comprising:
receiving a SIP request by a user equipment (UE) (301) for a mobile terminated (MT) service in a mobile communication network;
starting the MT service, where the UE (301) sends a first indication from an upper layer to a non-access stratum (NAS) layer of the UE (301) to indicate that the MT service has started;
establishing a radio resource control (RRC) connection to resume the MT service after the UE (301) entering an RRC IDLE mode; and
determining to skip an access control process for the MT service based on the first indication sent to the NAS layer upon establishing of the RRC connection.

2. The method according to claim 1, wherein the SIP request is a SIP INVITE request or a SIP MESSAGE request.

3. The method according to claim 1, wherein the MT service belongs to one of a multimedia telephony (MMTel) voice service, MMTel video service, and a short message service over IP (SMSoIP).

4. The method according to claim 1, wherein the UE (301) determines an access category, an RRC establishment cause, and a call type, of the MT service for establishing the RRC connection based on the indication.

5. The method according to claim 4, further comprising:
sending the RRC establishment cause to the network in an RRCSetupRequest message for establishing the RRC connection.

6. The method according to claim 1, wherein the UE (301) also sends the first indication to the NAS layer when a PDU session for the MT service is transferred to 3GPP access.

7. The method according to claim 6, wherein the UE (301) determines that the MT service is transferred when the UE (301) sends a PDU session establishment request in an UL NAS TRANSPORT message with a request type set to "existing PDU session".

8. The method according to claim 1, further comprising:
sending a second indication from the upper layer to the NAS layer of the UE (301) to indicate that the MT service has ended.

9. A User Equipment (UE), comprising:
a receiver that receives a SIP request by a user equipment (UE) for a mobile terminated (MT) service in a mobile communication network;
an application layer handling circuit that starts the MT service, where the UE (301) sends a first indication from an upper layer to a non-access stratum (NAS) layer of the UE (301) to indicate that the MT service has started;
a radio resource control (RRC) handling circuit that establishes an RRC connection to resume the MT service after the UE (301) entering an RRC IDLE mode; and
a control circuit (290) that determines to skip an access control process for the MT service based on the first indication sent to the NAS layer upon establishing of the RRC connection.

10. The UE according to claim 9, wherein the SIP request is a SIP INVITE request or a SIP MESSAGE request.

11. The UE according to claim 9, wherein the MT service belongs to one of a multimedia telephony (MMTel) voice service, MMTel video service, and a short message service over IP (SMSoIP).

12. The UE according to claim 9, wherein the UE (301) determines an access category, an RRC establishment cause, and a call type, of the MT service for establishing the RRC connection based on the indication.

13. The UE according to claim 12, further comprising:
a transmitter that sends the RRC establishment cause to the network in an RRCSetupRequest message for establishing the RRC connection.

14. The UE according to claim 9, wherein the UE (301) also sends the first indication to the NAS layer when a PDU session for the MT service is transferred to 3GPP access, and the UE (301) determines that the MT service is transferred when the UE (301) sends a PDU session establishment request in an UL NAS TRANSPORT message with a request type set to "existing PDU session".

15. The UE according to claim 9, further comprising:
a transmitter that sends a second indication from the upper layer to the NAS layer of the UE to indicate that the MT service has ended.
